Europäisches Patentamt

European Patent Office

Office européen des brevets

(19)

(11) **EP 0 487 384 B1**

## (12) FASCICULE DE BREVET EUROPEEN

(45) Date de publication et mention
de la délivrance du brevet:
**21.01.1998 Bulletin 1998/04**

(51) Int Cl.⁶: **G06T 5/40**

(21) Numéro de dépôt: **91403080.4**

(22) Date de dépôt: **15.11.1991**

(54) **Dispositif automatique de réglage du contraste d'images issues d'une caméra, et caméra comportant un tel dispositif**

Vorrichtung zur automatischen Kontrasteinstellung von Bildern und mit dieser versehene Kamera

System for automatic contrast regulation of images and camera provided with same

(84) Etats contractants désignés:
**DE FR GB IT NL**

(30) Priorité: **23.11.1990 FR 9014616**

(43) Date de publication de la demande:
**27.05.1992 Bulletin 1992/22**

(73) Titulaire: **THOMSON-TRT DEFENSE
78280 Guyancourt (FR)**

(72) Inventeur: **Souty, Dominique
F-92045 Paris la Défense (FR)**

(74) Mandataire: **Lincot, Georges et al
THOMSON-CSF-S.C.P.I.,
13, Avenue du Président
Salvador Allende
94117 Arcueil Cédex (FR)**

(56) Documents cités:
**EP-A- 0 353 409          GB-A- 2 129 635
US-A- 3 983 320**

• **PATENT ABSTRACTS OF JAPAN vol. 12, no. 133
(P-693)(2980) 22 Avril 1988 & JP-A- 62 254 276**

## Description

L'invention se rapporte au domaine des caméras et a plus particulièrement pour objet un dispositif de réglage de contraste d'images et une caméra, notamment thermique, comportant un tel dispositif.

Dans une image constituée de plusieurs scènes, s'il y a trop de contraste, l'image est saturée et s'il n'y en a pas assez l'image apparaît entièrement grise ; par exemple dans une image issue d'une caméra thermique, infrarouge, il existe des éléments "chauds", notamment la terre, et des éléments froids, notamment le ciel. Il est connu un dispositif de contrôle de niveaux de gris d'un signal vidéo tel que décrit dans le document GB-A-2 129 635 "Controlling the grey levels represented by a video signal". Ce dispositif repose sur une mesure de la dispersion conduisant à une valeur de correction de gain. L'invention repose sur un critère de non-saturation qui permet la construction d'un tableau assurant une grande rapidité d'asservissement.

En l'absence de dispositif de commande automatique, le gain (contraste) des caméras thermiques est commandé manuellement par l'opérateur, et le niveau moyen quant à lui n'est pas ajusté : ainsi une scène totalement froide peut donner la même image qu'une scène totalement chaude, c'est-à-dire une image grise.

L'invention a pour but d'éviter ce défaut afin d'obtenir une image dans laquelle des détails peuvent être distingués dans les zones utiles.

L'invention a pour objet un dispositif permettant de résoudre le problème de l'obtention d'un contraste adapté au contenu de l'image par une commande de gain tenant compte du contenu de l'image automatiquement. Pour cela l'invention met en oeuvre une commande automatique de gain à partir d'une analyse des images, de façon qu'une partie substantielle, par exemple 80%, des points de l'image aient des niveaux non saturés (ni trop "blancs", ni trop "noirs", cette condition permettant d'obtenir des images ayant un contraste convenable.

Selon l'invention un dispositif de réglage automatique du contraste d'images issues d'une caméra basé sur la génération d'une commande automatique de gain de niveau de luminosité élaborée à partir d'une analyse d'histogrammes de niveaux de luminosité de points de l'image préalablement mis en mémoire est caractérisé en ce qu'il comprend un automate pour établir l'histogramme de niveaux de luminosité d'un ensemble de points extraits de l'ensemble de l'image, un microprocesseur microprogrammé, pour commander le gain de niveau de luminosité pour rendre fixe et égal à une valeur pré-programmée le nombre de points analysés dont le niveau de luminosité est exploitable selon deux seuils programmables et, pour adresser un tableau constitué d'un nombre déterminé de tranches imbriquées de niveaux de luminosité regroupant des niveaux de luminosité dans lequel une tranche dite optimale est délimitée par les deux seuils programmables et dans lequel à chaque tranche de niveaux de luminosité est associée une valeur de la variation relative de gain qui, appliquée en entrée de la commande automatique du gain de niveau de luminosité, a pour effet de translater les niveaux de luminosité de la tranche vers la tranche optimale, et, pour déterminer le numéro de tranche dans laquelle le nombre de points regroupés est le plus proche de la valeur pré-programmée de nombre de points analysés dont le niveau de luminosité est considéré exploitable et, pour appliquer en entrée de la commande automatique de gain de niveau de luminosité la variation relative de gain déterminée par l'adressage du tableau à partir du numéro de tranche.

Le principe de la solution mise en oeuvre dans la présente invention est donc une analyse statistique de l'image : la commande de gain est élaborée à partir de cette analyse pour optimiser l'image.

Lorsqu'une telle commande automatique de gain est mise en oeuvre, le niveau moyen du signal est de préférence, également commandé de manière automatique, et, pour assurer une cohérence des deux asservissements, cette commande de niveau moyen est également fondée sur les résultats de l'analyse statistique de l'image, les temps de réponse des deux asservissements étant adaptés.

L'invention a donc également pour objet un dispositif tel que décrit ci-dessus qui comporte en outre, pour maintenir un niveau moyen convenable dans l'image, un circuit d'interface de commande de niveau moyen dont l'entrée reliée au microprocesseur reçoit une valeur d'erreur de niveau moyen et dont la sortie, à relier à une entrée de correction correspondante de la caméra fournit le signal de commande de niveau moyen associé destiné à minimiser cette valeur d'erreur, et en ce que le microprocesseur calcule le niveau moyen de la luminosité dans une zone dite de recalage choisie a priori dans une zone d'image et le compare à un niveau moyen de référence pour déterminer la valeur d'erreur de niveau moyen.

L'invention a aussi pour objet une caméra, notamment une caméra thermique embarquée comportant un tel dispositif de réglage automatique.

L'invention sera mieux comprise et d'autres caractéristiques apparaîtront à l'aide de la description qui suit, en référence aux figures annexées.

La figue 1 illustre une chaîne de traitement du signal issu d'une caméra infra-rouge, selon l'invention ;
La figure 2 illustre le schéma synoptique du dispositif de commande automatique selon l'invention ;
La figure 3 illustre le découpage en 96 zones des images pour l'analyse statistique effectuée par le dispositif suivant l'invention ;

EP 0 487 384 B1

Les figures 4 et 5 sont sont des schémas explicatifs ;
La figure 6 est un schéma synoptique de la boucle d'asservissement de gain ;
La figure 7 est un autre schéma explicatif ;
La figure 8 illustre des formes de zones de recalage de niveau moyen ;
La figure 9 est un schéma synoptique de la bouche d'asservissement de niveau moyen.

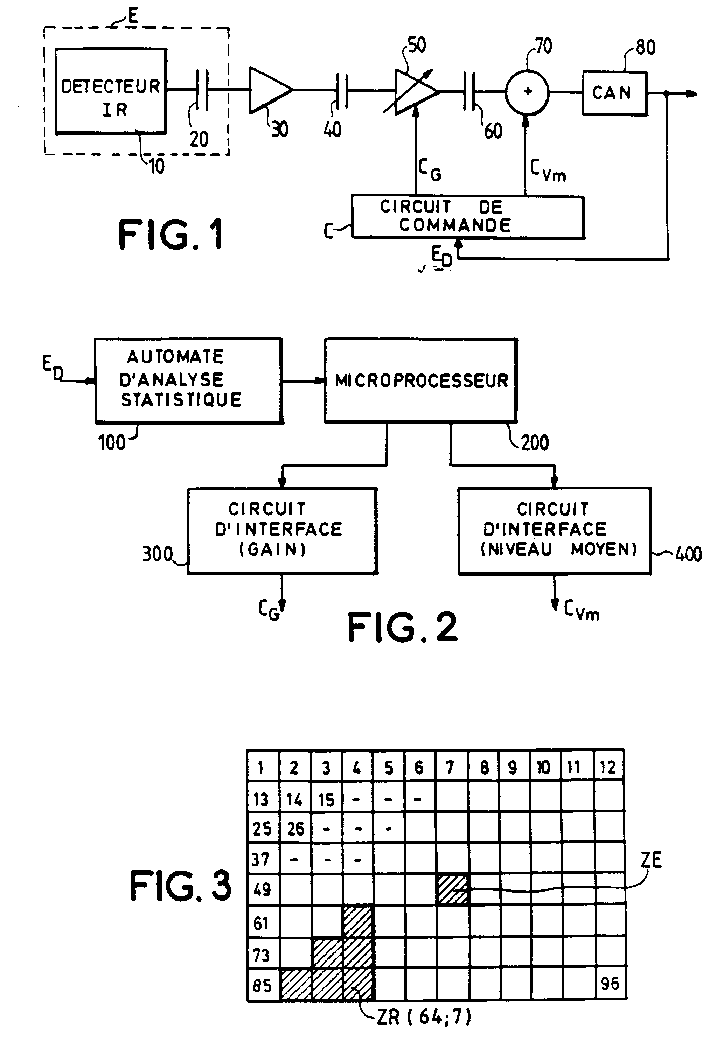

La chaîne de traitement de signal d'une caméra thermique, infra-rouge, selon l'invention est représentée sur la figure 1. Elle comporte de manière classique un détecteur infra-rouge 10 et un circuit de coupure de la composante continue, représenté par un condensateur 20, formant un ensemble E, cet ensemble étant refroidi à -200°C pour diminuer le bruit dans le signal utile. Cet ensemble est suivi d'un amplificateur 30. Pour la commande de contraste, un amplificateur à gain variable 50 précédé d'un condensateur de découplage 40, est prévu, cet amplificateur étant dans les dispositifs antérieurs commandé manuellement, et, selon l'invention, commandé automatiquement par un circuit de commande C fournissant le signal de commande de gain $C_G$. La sortie de cet amplificateur est couplée à l'entrée d'un convertisseur analogique numérique 80 via un condensateur 60, et dans le mode de réalisation représenté, via un additionneur 70 permettant d'ajouter au signal de sortie de l'amplificateur à gain variable un signal de commande $C_{Vm}$, permettant un ajustement automatique du niveau moyen, également fourni par le circuit de commande C.

Le circuit de commande C illustré sur la figure 2 est principalement constitué

- d'un automate d'analyse statistique 100, ayant une entrée de données numériques $E_D$ et effectuant une analyse statistique de l'image,
- un microprocesseur 200, qui, à partir des résultats de cette analyse statistique élabore les valeurs de consigne nécessaire à la commande de gain (contraste) et éventuellement à la commande de niveau moyen (luminosité) ;
- un premier circuit d'interface 300 pour transmettre le signal de commande de gain $C_G$ à l'amplificateur à gain variable,
- un second circuit d'interface 400, pour transmettre un signal de commande de niveau moyen $C_{Vm}$ à l'additionneur de la chaîne de traitement.

L'automate d'analyse statistique de l'image 100, dans un mode de réalisation, fonctionne de la manière suivante :

Dans une première phase, après une demande d'acquisition de signaux de commande par le microprocesseur 200, l'image est découpée en 96 zones élémentaires ZE portant chacune un numéro, et, pour chacune de ces zones un histogramme des valeurs de luminance est établi. Les 96 zones sont organisées en 12 zones par ligne d'image et 8 zones par colonne d'image, comme illustré par la figure 3. Dans un mode de réalisation, l'histogramme d'une zone est établi à partir d'un nombre limité de points, soit 256 points par zone pour une image constituée de 510 lignes de 780 points sur le détecteur : pour cela, dans le sens horizontal seul 1 point sur 4 est analysé (soit 16 points par ligne pour chaque zone) et dans le sens vertical, dans chaque zone, seule une ligne sur deux des trames paires est analysée (soit 16 lignes).

En pratique, lorsque le microprocesseur demande une acquisition, celle-ci est effectuée pendant la trame suivante de durée 16 ms. Les valeurs de luminance des points sont stockées dans une mémoire de l'automate d'analyse statistique 100 de 8 K octets, pour stocker 96 fois 64 octets, si les niveaux de luminosité de l'image sont numérisés sur 64 niveaux. A la fin de l'analyse le microprocesseur est interrompu. Il peut alors, en lisant la mémoire effectuer son traitement. Avant un nouveau traitement le microprocesseur efface la mémoire.

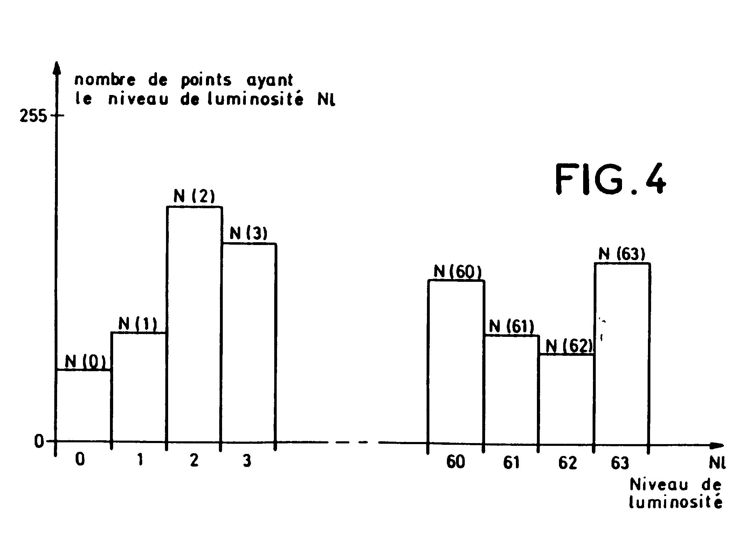

La figure 4 illustre un exemple d'histogramme donnant pour chaque niveau de luminosité 1 de 0 à 63 le nombre N(1) des points analysés dans chaque zone ayant ce niveau (la somme des points analysés de chaque zone est égal à 256 dans le mode de réalisation décrit). L'histogramme d'une zone est donc constitué de 64 octets, un octet pour chaque niveau de luminosité, chaque octet donnant le nombre de points de la zone ayant le niveau correspondant au rang de cet octet.

Pour asservir le gain, le procédé, piloté par un logiciel adapté, tend à rendre fixe et égal à une valeur prédéterminée, le nombre de points saturés de l'image.

En effet lorsque le gain est trop fort, le nombre de points saturés de l'image est lui aussi trop élevé et lorsque le gain est trop faible le nombre de points saturés est trop faible, voire nul.

Dans un mode de réalisation le gain est asservi de telle sorte que le nombre de points de l'image dont le niveau de luminosité est compris entre 14 et 53 soit égal à 80%. Ainsi il reste 20% des points saturés ou proches de la saturation dont les niveaux sont compris entre 0 et 13 ou entre 54 et 63.

Le nombre de points NEXP dont la luminosité est exploitable (niveaux compris entre 14 et 53) pour l'ensemble des 96 histogrammes associés aux 96 zones de l'image doit donc être ramené à un nombre optimal NOPT, correspondant à 80% des points, soit NOPT = 0,80x96x256.

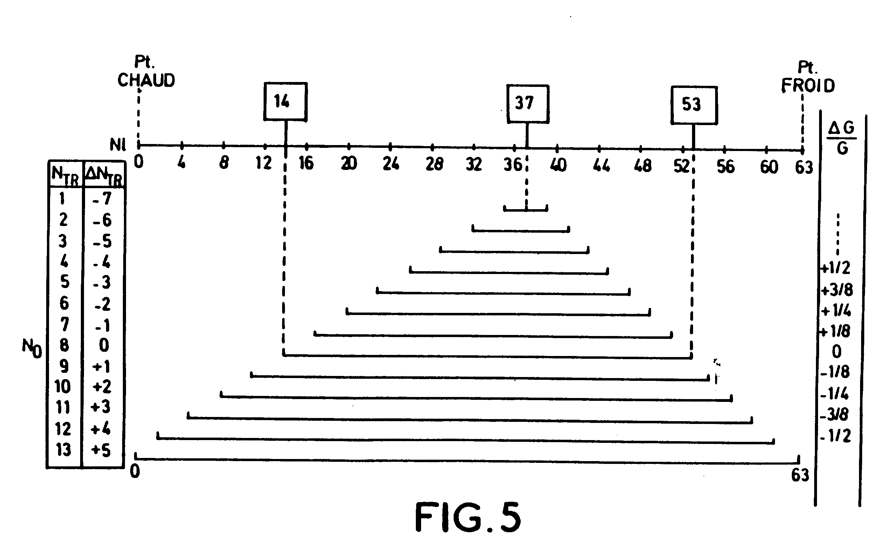

Pour estimer la variation à apporter au gain, les niveaux de luminosité sont regroupés dans 13 tranches, comme illustré par la figure 5 qui représente les numéros $N_{TR}$ des tranches et les tranches (ou plages) de niveaux de luminosité associées, ces tranches étant imbriquées les unes dans les autres. La tranche numéro 13 correspondant à la totalité (100%) des niveaux de luminosité, alors que la tranche numéro 1 correspond aux niveaux moyens. Le niveau moyen est pris non pas autour de 31 mais autour de 37, c'est-à-dire décalé vers les luminosités élevées car le froid (luminosité élevée en contraste positif) constitue rarement une menace :à peu près 2/3 de la dynamique est donc dans le chaud, niveaux de 0 à 37, et 1/3 dans le froid, niveaux 38 à 63. Les tranches croissent de l'une à la suivante de 3 niveaux vers les niveaux de luminosité faibles et de deux niveaux vers les niveaux de luminosité élevés. Le logiciel de traitement recherche par essais successifs, le numéro de la tranche répondant au critère, c'est-à-dire qui comporte 80% des points analysés ou juste moins, soit $N_{TRC}$ ce numéro.

Par exemple, pour une valeur de gain G donnée, si le nombre de points correspondant à 80% de points analysés dans l'ensemble des zones est trouvé dans la tranche $N_{TR} = 4$, c'est-à-dire dans la plage couvrant les niveaux 26 à 45, l'image ne présente pas assez de contraste et le gain doit être augmenté pour étaler ces 80% de points dans une tranche plus large, par exemple dans la tranche de référence $N_{TRO} = 8$ pour que 80% des points soient répartis entre les niveaux 14 et 53.

Le problème est alors d'appliquer la correction de gain nécessaire pour obtenir ce résultat.

Soit $\Delta N_{TR}$ la différence entre le numéro de la tranche $N_{TRC}$ répondant au critère, trouvée par essais successifs et le numéro de la tranche optimale $N_{TRO}$ (8 dans l'exemple mentionné ci-dessus). A chaque $\Delta N_{TR}$ est associé une variation relative de gain $\Delta G/G$ indiquée sur la figure 5, variant par pas de 1/8. Ainsi pour l'exemple indiqué ci-dessus où $\Delta N_{TR} = 4$, la variation relative de gain à appliquer est +1/2.

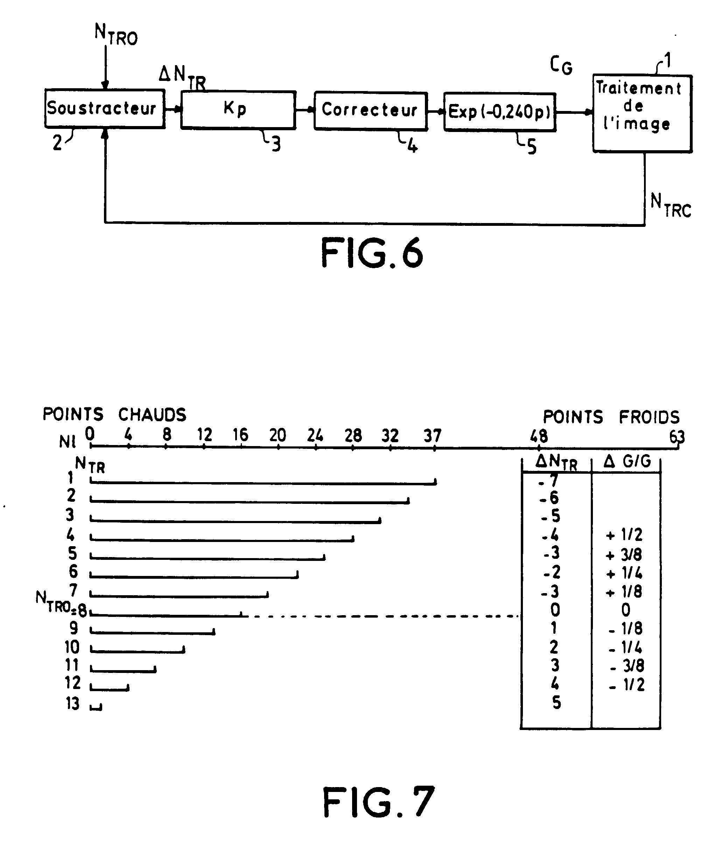

Pour cela une boucle d'asservissement du gain réalisée par logiciel et illustrée par le schéma fonctionnel de la figure 6 est prévue.

A partir du traitement d'image 1 effectué par le microprocesseur et plus particulièrement du numéro $N_{TRC}$ de la tranche répondant au critère (80% des points dans cette tranche selon l'exemple indiqué ci-dessus) et du numéro de tranche optimal, soit $N_{TRO} = 8$, un écart $\Delta N_{TR}$ est calculé par le soustracteur 2, et donc l'erreur estimée sur le gain, $E_G$. L'erreur ainsi calculée, après amplification Kp, 3, est filtrée par le correcteur de l'asservissement 4. A l'issue de ce filtrage, effectué par logiciel, une nouvelle commande de gain $C_G$ est appliquée à l'amplificateur 50 via le circuit de commande, donc non filtrée par des circuits analogiques. Pour répartir le temps de calcul, le traitement n'est pas effectué sur une seule trame mais sur deux trames, soit un temps total pour l'acquisition d'un histogramme complet de l'image égal à 160 ms. Le retard pur sensiblement équivalent à l'échantillonneur-bloqueur formant le convertisseur analogique-numérique 80, est égal à 80 ms(2 x 40 ms). Sa fonction de transfert 5, indiquée sur le schéma fonctionnel de la boucle est donc exp(-0, 240p).

Les caractéristiques de l'asservissement du gain sont les suivantes : asservissement de classe 1 ; fréquence de coupure à -3dB comprise entre 0,3 et 0,7 Hz ; fréquence d'échantillonnage pour la saisie des images et le calcul 160 ms ; dynamique de la commande de gain de 31 à 255 ; précision sur la commande de gain ±10 en régime permanent sur image fixe.

Pour certaines applications, cette commande automatique de gain doit être modifiée pour que le résultat attendu soit obtenu. En effet, si par exemple les images traitées sont des images comportant une part importante de ciel, par exemple 30 à 60%, la température de l'image thermique est faible, et donc le niveau de luminosité est élevé. Pour satisfaire à la condition indiquée ci-dessus, à savoir 80% de points dans la tranche 8, le gain va être amené à son minimum. Or les points intéressants sont les points chauds de niveaux de luminosité faibles. Si le traitement décrit ci-dessus était appliqué tel quel, il n'y aurait pas de contraste sur les points chauds. Dans ce cas, il est possible de modifier le critère et au lieu de considérer qu'une image est correcte si 80% des points sont dans la tranche 8 et 20% dans les extrêmes; on considère alors, par exemple, que le gain est correct si 20% de points se trouvent dans une tranche couvrant une zone extrême, soit par exemple une tranche couvrant les points les plus chauds, par exemple les niveaux 0 à 16. Si 20% de points se trouvent dans une tranche plus grande, le gain est considéré comme insuffisant. L'analyse est alors centrée sur les niveaux "intéressants" de l'image.

La figure 7 est un diagramme du même type que celui de la figure 5, mais sur lequel l'intérêt est concentré sur les points chauds, c'est-à-dire sur les niveaux de luminosité faibles. Les tranches dont les numéros vont de 1 à 13 couvrent la plage de niveaux 0 à 37 pour la tranche 1, jusqu'à la plage de niveaux 0 et 1 pour la tranche 13, par pas de 3 niveaux. Le critère est alors l'obtention de 20% des points dans la tranche 8, alors définie comme la tranche contenant les niveaux 0 à 16, soit 20% des points dont les niveaux de luminosité $N_1$ sont compris entre 0 et 16. La figure 7 indique également dans le tableau de droite les variations de gain à apporter en fonction de l'écart $\Delta N_{TR}$ entre le numéro de tranche qui comporte le nombre de points le plus proche de 20% et $N_{TRO}=8$, numéro de la tranche de référence.

Bien entendu les schémas des figures 5 et 7 sont des schémas explicatifs, en relation avec des modes de réalisation particuliers, dont l'adaptation en fonction de critères différents est immédiate. Ce "centrage" éventuel de l'analyse sur les niveaux de luminosité associés aux éléments "intéressants" de l'image peut être fait une fois pour toutes, au moment de la configuration du matériel, ou être programmable.

Pour l'obtention d'images issues de caméras thermiques fixes à terre, ou embarquées à bord de véhicules terrestres, sur des engins quine sont pas très rapides, cette commande automatique de gain, avec un éventuel centrage sur les niveaux intéressants, peut être mise en oeuvre seule car les variations de niveau moyen peuvent être d'amplitude assez faible pour ne pas affecter la séquence d'images, comme l'était auparavant la commande de gain manuelle.

Par contre pour l'obtention d'images issues de caméras thermiques embarquées à bord d'engins rapides, et particulièrement à bord d'aéronefs où les zones visées peuvent varier complètement d'un instant à l'autre, il est nécessaire, avec une telle commande automatique de gain, de maintenir le niveau moyen à une valeur convenable. Pour cela une zone dite zone de recalage est déterminée dans l'image, et un asservissement de niveau moyen est effectué pour maintenir la luminance moyenne, dans cette zone de recalage de l'image, constante.

La partie la plus intéressante de l'image est celle montrant la terre. Aussi, tant que la terre apparaît sur l'image, l'asservissement est appliqué sur une zone de terre pour y maintenir une luminance constante.

Dès que la terre disparaît de l'image, ce qui arrive notamment lorsque les images sont prises par des systèmes embarqués à bord d'aéronefs, l'asservissement est appliqué à une zone de ciel, mais, pour assurer la continuité, la luminance moyenne de la zone de ciel est maintenue au niveau qu'elle avait juste avant la disparition de la terre de l'image.

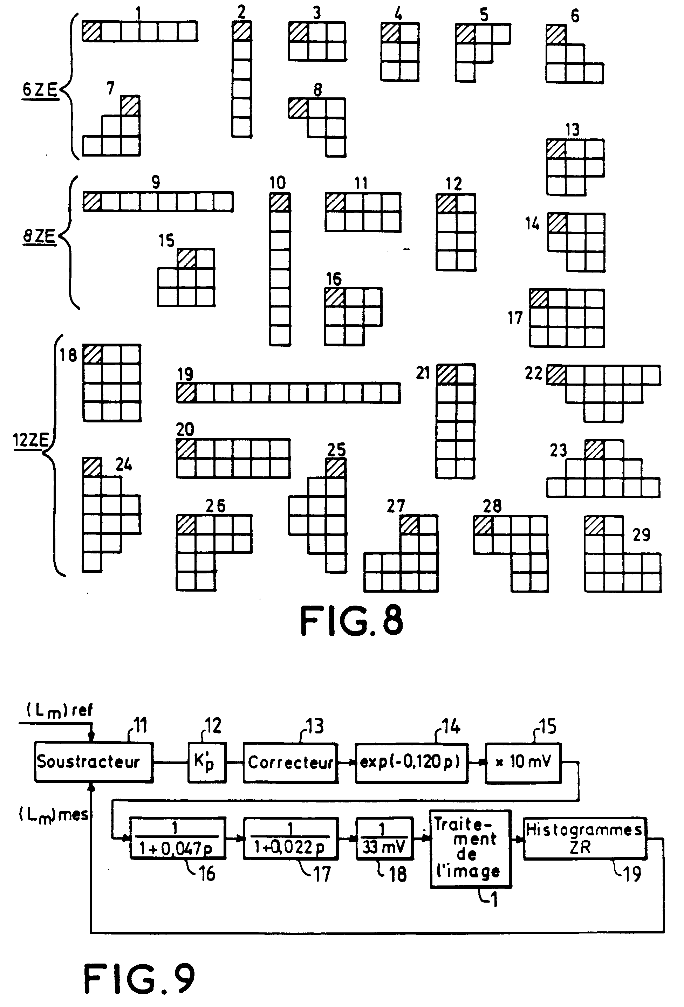

La zone de recalage est un ensemble de zones élémentaires ZE contiguës dans l'image (chaque ZE ayant au moins un côté commun avec une autre zone ZE). En pratique une zone de recalage peut contenir, 6, 8, ou 12 zones élémentaires $Z_E$. Une zone de recalage est définie par deux octets ; le premier octet désigne la position de la zone dans l'image et le second définit la forme de la zone de recalage. La position de la zone utilise une numérotation des zones qui peut être celle indiquée sur la figure 3, et, parmi les zones élémentaires ZE formant la zone de recalage ZR, c'est le numéro de la zone élémentaire la plus à gauche de la ligne la plus haute qui est transmise : par exemple, pour la zone de recalage ZR à 6 ZE représentée à titre d'exemple sur la figure 3, dont la forme est désignée par le numéro 7, la zone est désignée par les octets ZR (64 ; 7). Les zones de recalage à 6, 8, 12 zones élémentaires sont illustrées sur la figure 8 qui précise par des hachures la zone élémentaire dont la position dans l'image donne la position de la zone de recalage.

Après une acquisition, la moyenne de la luminosité de cette zone de recalage est calculée à partir des histogrammes des zones élémentaires constituant cette zone de recalage, qui ont été acquis par l'automate d'analyse statistique 100. Cette moyenne est le niveau moyen de luminosité mesuré sur une trame : (Lm)mes. Cette mesure est ensuite comparée au niveau moyen de référence de terre (Lm)RefT. L'erreur évaluée par différence est filtrée par le correcteur d'une boucle d'asservissement décrite ci-après. Lorsque la zone de recalage de terre existe dans l'image, le niveau de luminosité moyenne de référence est constant. Si la luminosité de l'image varie de 0 pour des températures chaudes à 63 pour les températures froides comme indiqué ci-dessus, en contraste positif les points chauds apparaissent en blanc et les points froids en noir. En contraste positif la luminosité moyenne de référence est choisie égale à 37 dans le mode de réalisation décrit, niveau moyen déjà indiqué ci-dessus. Un contraste négatif pourrait être choisi ; Dans ce cas le niveau de luminosité de référence (Lm)ref serait égal à 63 moins le niveau moyen de référence de terre égal 37, c'est-à-dire égal à 26. La sélection du type de contraste permet de mieux voir les points chauds en contraste positif dont les niveaux sont entre 0 et 37 ou les points froids en contraste négatif dont les niveaux sont entre 26 et 63.

Comme il a été indiqué ci-dessus, lorsque la terre a disparu de l'image, il est nécessaire de maintenir le niveau moyen d'une zone de recalage de ciel au niveau moyen qu'elle avait juste avant la disparition de la terre. Pour cela, tant que la terre est apparente, les histogrammes de luminosité de la dernière zone de recalage de ciel sont sauvegardés. Dès que la terre disparaît de l'image le niveau moyen de la zone de recalage de ciel sauvegardée est calculé, soit (Lm)refC. Ensuite, selon le type de contraste à l'instant de la sauvegarde, une éventuelle correction est appliquée :

- en contraste positif (Lm) RefC = (Lm)RefC
- en contraste négatif (Lm)RefC = 63 - (Lm)RefC.

Puis à chaque nouvelle acquisition, tant que la terre ne réapparaît pas, le niveau moyen de la zone de recalage du ciel est maintenu à la valeur de référence ainsi établie.

Pour obtenir l'asservissement, la commande analogique est appliquée par logiciel via un convertisseur numérique-analogique du circuit d'interface 400 dont le pas de quantification est 10 mV. Le circuit d'interface 400 filtre cette commande analogique à travers deux filtres passe-bas dont les fonctions de transfert dans un mode de réalisation ont été choisies respectivement à 1/1+0,022p et l'autre à 1/1+0,047p. Comme illustré sur la figure 1 la commande ainsi filtrée $C_{Vm}$ est ajoutée au signal vidéo via l'additionneur 70 avant conversion analogique-numérique par le convertisseur 80, cette dernière étant effectuée avec un pas de quantification de 33 mV. Le calcul du niveau moyen étant effectué sur des zones de recalage de 6, 8 ou 12 zones élémentaires ZE, le résultat brut donne donc 6, 8 ou 12 fois le niveau moyen. Pour éviter de diviser par 3, le résultat est ramené quel que soit le nombre de zones élémentaires à 3 fois le niveau moyen, le rapport des pas de quantification du convertisseur analogique du circuit d'interface gain à celui du convertisseur analogique-numérique 80 de la chaîne d'organisation du signal étant égal à 1/3 (10: 33). La division par trois est ainsi réalisée par matériel.

Le retard pur dû à l'acquisition et au traitement est de 80 ms,et le retard pur sensiblement équivalent à l'échantillonneur-bloqueur formant le convertisseur numérique-analogique est égal à 40 ms, soit un retard total de 120 ms. La fonction de transfert est alors exp (-0,120p ).

Le schéma fonctionnel de la boucle d'asservissement du niveau moyen ayant les caractéristiques mentionnées ci-dessus est illustré sur la figure 9. Il comporte un soustracteur 11, recevant d'une part le niveau moyen de référence (Lm)ref de terre T ou à défaut de ciel C et d'autre part le niveau moyen mesuré (Lm)mes. Ce soustracteur est suivi d'un amplificateur K'p, 12 et d'un correcteur 13 dont le but est d'assurer la stabilité de la boucle et d'annuler l'erreur sur le niveau moyen en régime permanent. Ce régime permanent est par hypothèse une image dont la luminosité moyenne est constante. Compte tenu des hypothèses ci-dessus, ce correcteur, réalisé par logiciel, est essentiellement un intégrateur simple ; ainsi l'asservissement est de classe 1. La boucle fait apparaître la fonction de transfert 14 correspondant au retard total (120ms) puis la conversion 15 par le convertisseur CNA du circuit d'interface 400, et les deux filtrages passe-bas, 16 et 17 et la conversion 18 par le convertisseur CAN. Le traitement de l'image 1 permettant d'obtenir les histogrammes des zones élémentaires est suivi du traitement 19, nécessaire à la mesure de niveau moyen comme indiqué ci-dessus. A partir des histogrammes de la zone de recalage ZR (chaque histogrammes d'une zone élémentaire ZE comprenant 64 octets N(1), 1 variant de 0 à 63) le niveau moyen de la zone de recalage multiplié par 3 est donc calculé par la formule suivante :

$$3(Lm)mes = \frac{3}{(N_{ZE})ZR} \times \frac{1}{256} \sum_{1=0}^{63} 1 \sum_{(N_{ZE})ZR} H(1)$$

$(N_{ZE})ZR$ est le nombre de zones élémentaires dans la zone de recalage choisie.

Le rapport 1/256 assure la moyenne sur 256 points par histogramme. Le rapport $1/(N_{ZE})ZR$ assure la moyenne sur l'ensemble des histogrammes des ZE correspondant à la zone de recalage.

Ainsi, avec cette correction des niveaux moyens les niveaux de gris de la terre ne dépendent plus du pourcentage de ciel dans l'image. De plus on évite la saturation et les détails de l'image sont toujours vus. Cette commande de niveau moyen est particulièrement utile pour les systèmes embarqués car le pourcentage de ciel dans l'image peut varier fortement et la correction automatique de gain seule entraînerait corrélativement des variations importantes de la luminance moyenne dans les zones utiles de l'image. Pour le choix des zones de recalage, le système peut tenir compte de la position de l'horizon dans l'image ; en effet, dans un système embarqué, le calculateur à bord de l'avion sait déterminer où est l'horizon dans l'image et donc en déduire des zones de recalage connues a priori dans la partie terre ou dans la partie ciel de l'image.

Il est clair que cette commande automatique de niveau moyen est pratiquement indispensable notamment dans les systèmes embarqués à partir du moment où un contrôle automatique de gain est mis en oeuvre ; en effet, à défaut d'une telle commande, le gain est bloqué au minimum. Pour cette combinaison des deux asservissements, il est tout à fait indispensable d'assurer une cohérence. En effet dans le calcul du gain la tendance est à l'étalement du nombre de points autour du niveau moyen. En conséquence la boucle d'asservissement du niveau moyen est choisie au moins 2 fois plus rapide que la boucle d'asservissement du gain. Comme le temps de réponse est de l'ordre de 100 à 300 ms pour la boucle automatique de commande de niveau moyen, le temps de réponse de la boucle automatique de gain peut aller jusqu'à 0,7s. L'invention n'est pas limitée aux modes de réalisation décrits et illustrés. En particulier, il ressort de la description ci-dessus que lorsque les deux commandes sont appliquées, les commandes de gain et de niveau de luminosité sont appliquées avant d'effectuer la conversion analogique numérique. Ce mode de réalisation est préféré car les corrections ainsi appliquées sont plus faciles à mettre en oeuvre. Cependant il est possible d'introduire ces corrections en numérique après la conversion analogique-numérique. Par contre l'ordre d'application des corrections est nécessairement d'abord la correction de contraste (variation du gain) puis la correction de luminosité (niveau moyen).

Les composants utilisés pour réaliser le circuit de commande sont préférentiellement des composants de technologie HCMOS pour minimiser l'élévation de température.

L'invention s'applique aux caméras infra-rouge mais est également applicable aux autres caméras, notamment dans le domaine visible.

De plus il a été indiqué ci-dessus que, pour la commande automatique du gain, l'histogramme des niveaux de luminosité de l'image analysée était établi à partir des histogrammes d'un ensemble de zones élémentaires dont la juxtaposition forme l'image analysée. Cette disposition est prévue dans l'exemple du fait de la combinaison de cette commande automatique de gain et de la commande automatique de niveau moyen, cette dernière utilisant les histogrammes d'une zone de recalage constituée d'un ensemble de zones élémentaires. Ainsi les calculs ne sont fait qu'une seule fois. Dans le cas d'une réalisation où seule une commande automatique de gain est prévue, il est possible d'établir directement l'histogramme de l'ensemble de l'image analysée, à partir d'un sous-ensemble de points couvrant toute l'image, par exemple 1 point sur 4 en ligne et un point sur 2 en colonne, sans passer par des zones élémentaires de 256 points.

## Revendications

1. Dispositif de réglage automatique du contraste d'images issues d'une caméra basé sur la génération d'une commande automatique de gain de niveau de luminosité élaborée à partir d'une analyse d'histogrammes de niveaux de luminosité de points de l'image préalablement mis en mémoire caractérisé en ce qu'il comprend un automate (100) pour établir l'histogramme de niveaux de luminosité d'un ensemble de points extraits de l'ensemble de l'image, un microprocesseur microprogrammé (200), pour commander le gain de niveau de luminosité pour rendre fixe et égal à une valeur pré-programmée le nombre de points analysés dont le niveau de luminosité (N1) est exploitable selon deux seuils programmables et, pour adresser un tableau constitué d'un nombre déterminé de tranches imbriquées de niveaux de luminosité (N1) regroupant des niveaux de luminosité (N1) dans lequel une tranche dite optimale ($N_O$,$N_{TRO}$) est délimitée par les deux seuils programmables et dans lequel à chaque tranche ($N_{TR}$) de niveaux de luminosité (N1) est associée une valeur de la variation relative de gain (AG/G) qui, appliquée en entrée de la commande automatique du gain de niveau de luminosité, a pour effet de translater les niveaux de luminosité (N1) de la tranche ($N_{TR}$) vers la tranche optimale ($N_O$, $N_{TRO}$), et, pour déterminer le numéro de tranche ($N_{TR}$) dans laquelle le nombre de points regroupés est le plus proche de la valeur pré-programmée de nombre de points analysés dont le niveau de luminosité (N1) est considéré exploitable et, pour appliquer en entrée de la commande automatique de gain de niveau de luminosité la variation relative de gain ($\Delta$ G/G) déterminée par l'adressage du tableau à partir du numéro de tranche ($N_{TR}$).

2. Dispositif selon la revendication 1, caractérisé en ce que l'automate (100) établit l'histogramme de niveaux de luminosité de points extraits de l'image tel que ces points soient extraits suivant la règle d'un point sur P et d'une ligne sur L des trames de même parité pour des images formées par une caméra.

3. Dispositif selon la revendication 2, caractérisé en ce que P = 4 et L = 2.

4. Dispositif selon la revendication 1, caractérisé en ce que l'automate (100) établit l'histogramme de niveaux de luminosité des points extraits de l'image à partir des n histogrammes de n zones élémentaires (ZE) couvrant l'image et auxquelles appartiennent les points.

5. Dispositif selon la revendication 4, caractérisé en ce que chaque zone élementaire (ZE) comporte 256 points analysés et en ce que l'automate (100) comporte une mémoire répartie en n zones comportant autant d'octets que de niveaux de luminosité (N1) possibles pour l'image.

6. Dispositif selon l'une quelconque des revendications 1 à 5, caractérisé en ce que le tableau est constitué de treize tranches parmi lesquelles la tranche optimale ($N_O$) a pour numéro 8 et est délimitée par les niveaux de luminosité (NL) de valeurs 14 et 53.

7. Dispositif selon l'une quelconque des revendications 1 à 6, caractérisé en ce que le microprocesseur (200) est microprogrammé pour rendre fixe et égal à 80% du nombre de points analysés le nombre de points, parmi les points analysés, dont le niveau de luminosité (NL) est exploitable.

8. Dispositif selon l'une des revendications 1 à 7, caractérisé en ce qu'il comprend en outre, pour maintenir un niveau moyen convenable dans l'image, un circuit d'interface de commande de niveau moyen (400) dont l'entrée reliée au microprocesseur (200) reçoit une valeur d'erreur de niveau moyen et dont la sortie, reliée à une entrée de correction correspondante de la caméra fournit le signal de commande de niveau moyen associé destiné à minimiser cette valeur d'erreur et en ce que le microprocesseur calcule le niveau moyen de la luminosité dans une zone dite de recalage (ZR) choisie a priori dans une zone d'image et le compare à un niveau moyen de référence pour déterminer la valeur d'erreur de niveau moyen.

9. Dispositif selon la revendication 8, caractérisé en ce que la zone de recalage (ZR) est choisie dans une zone d'image connue a priori comme étant une zone de terre.

10. Dispositif selon la revendication 9, caractérisé en ce qu'une zone de recalage (ZR) supplémentaire choisie dans une zone d'image connue a priori comme étant une zone de ciel est sauvegardée à chaque nouveau calcul de niveau moyen de la luminosité dans la zone de recalage de terre, la valeur moyenne de la luminosité dans la dernière zone de ciel sauvegardée étant utilisée comme référence de niveau moyen de l'image lorsque la zone de terre disparaît de l'image.

11. Dispositif selon l'une des revendications 8 à 10, caractérisé en ce que la zone de recalage (ZR) est formée d'un ensemble de n zones élémentaires contiguës.

12. Dispositif selon la revendication 11, caractérisé en ce que n est choisi parmi les valeurs 6, 8 et 12.

13. Dispositif selon la revendication 8, caractérisé en ce que son temps de réponse pour la commande automatique de niveau moyen est au moins deux fois plus court que son temps de réponse pour la commande automatique de gain, de façon à assurer la cohérence des deux commandes.

14. Caméra comportant un détecteur de signal d'image et une chaîne de traitement analogique de ce signal, caractérisée en ce qu'elle comporte en outre un dispositif de réglage automatique de contraste selon l'une des revendications 1 à 7, et des moyens à gain variable (50) ayant une entrée de commande reliée à la commande de gain du dispositif de réglage par l'intermédiaire d'un circuit d'interface (300).

15. Caméra selon la revendication 14, caractérisée en ce que le dispositif de réglage comporte en outre un circuit d'interface de commande de niveau moyen (400) et des moyens de calcul de la valeur d'erreur de niveau moyen selon l'une quelconque des revendications 8 à 13, pour la commande de luminosité des images et un additionneur (70) prévu dans la chaîne de traitement de signal pour recevoir d'une part le signal d'image et d'autre part, la valeur d'erreur de niveau moyen.

## Patentansprüche

1. Anordnung zur automatischen Einstellung des Kontrastes von Bildern, die von einer Kamera geliefert werden, beruhend auf der Erzeugung einer automatischen Steuerung der Helligkeitspegelverstärkung, die aufgrund einer Analyse von Histogrammen von Helligkeitspegeln von Punkten des zuvor gespeicherten Bildes ausgearbeitet wird, gekennzeichnet durch einen Automaten (100) zur Erstellung des Histogramms von Helligkeitspegeln einer Gruppe von aus dem gesamten Bild entnommenen Punkten, einen mikroprogrammierten Mikroprozessor (200) zur Steuerung der Helligkeitspegelverstärkung, um die Anzahl von analysierten Punkten, deren Helligkeitspegel ($N1$) gemäß zwei programmierbaren Schwellenwerten verwertbar ist, auf einen festen Wert zu bringen, der gleich einem vorprogrammierten Wert ist, und zur Adressierung einer Tabelle, die aus einer bestimmten Anzahl von verschachtelten Abschnitten von Helligkeitspegeln ($N1$) gebildet ist, welche Helligkeitspegel ($N1$) zusammenfassen, in der ein sogenannter optimaler Abschnitt ($N_O$, $N_{TRO}$) durch die beiden programmierbaren Schwellenwerte begrenzt ist und in der jedem Abschnitt ($N_{TR}$) von Helligkeitspegeln ($N1$) ein Wert der relativen Verstärkungsänderung ($\Delta G/G$) zugeordnet ist, der, wenn er an den Eingang zur automatischen Steuerung der Helligkeitspegelverstärkung angelegt wird, die Verschiebung der Helligkeitspegel ($N1$) des Abschnitts ($N_{TR}$) zu dem optimalen Abschnitt ($N_O$, $N_{TRO}$) bewirkt, und zur Bestimmung der Nummer des Abschnitts ($N_{TR}$), in dem die Anzahl von zusammengefassten Punkten dem vorprogrammierten Wert der Anzahl von analysierten Punkten, deren Helligkeitspegel ($N1$) als verwertbar angesehen wird, am nächsten kommt, und zum Anlegen der durch die Adressierung der Tabelle aufgrund der Nummer des Abschnitts ($N_{TR}$) bestimmten relativen Verstärkungsänderung ($\Delta G/G$) an den Eingang zur automatischen Steuerung der Helligkeitspegelverstärkung.

2. Anordnung nach Anspruch 1, dadurch gekennzeichnet, daß der Automat (100) das Histogramm von Helligkeitspegeln von Punkten erstellt, die derart aus dem Bild entnommen sind, daß diese Punkte nach der Regel von jeweils einem Punkt aus P Punkten und von jeweils einer Zeile aus L Zeilen der Teilbilder gleicher Parität für von einer Kamera geformten Bildern entnommen werden.

3. Anordnung nach Anspruch 2, dadurch gekennzeichnet, daß P = 4 und L = 2.

4. Anordnung nach Anspruch 1, dadurch gekennzeichnet, daß der Automat (100) das Histogramm von Helligkeitspegeln der aus dem Bild entnommenen Punkte ausgehend von n Histogrammen von n Elementarzonen (ZE) erstellt, die das Bild bedecken und denen die Punkte angehören.

**5.** Anordnung nach Anpruch 4, dadurch gekennzeichnet, daß jede Elementarzone (ZE) 256 analysierte Punkte enthält, und daß der Automat (100) einen Speicher aufweist, der in n Zonen aufgeteilt ist die ebenso viele Bytes enthalten, wie Helligkeitspegel (N1) für das Bild möglich sind.

**6.** Anordnung nach einem der Ansprüche 1 bis 5, dadurch gekennzeichnet, daß die Tabelle aus dreizehn Abschnitten gebildet ist, von denen der optimale Abschnitt ($N_O$) die Nummer 8 hat und durch die Helligkeitspegel (NL) der Werte 14 und 53 begrenzt ist.

**7.** Anordnung nach einem der Ansprüche 1 bis 6, dadurch gekennzeichnet, daß der Mikroprozessor (200) mikroprogrammiert ist, um die Anzahl der Punkte aus den analysierten Punkten, deren Helligkeitspegel (NL) verwertbar ist, auf einen festen Wert zu bringen, der gleich 80 % der Anzahl der analysierten Punkte ist.

**8.** Anordnung nach einem der Ansprüche 1 bis 7, dadurch gekennzeichnet, daß sie zur Aufrechterhaltung eines geeigneten mittleren Pegels im Bild außerdem eine Schnittstellenschaltung (400) zur Steuerung eines mittleren Pegels enthält, deren mit dem Mikroprozessor (200) verbundener Eingang einen Fehlerwert des mittleren Pegels empfängt und deren mit einem entsprechenden Korrektureingang der Kamera verbundener Ausgang das zugehörige Steuersignal für den mittleren Pegel liefert, das dazu bestimmt ist, diesen Fehlerwert zu minimieren, und daß der Mikroprozessor den mittleren Pegel der Helligkeit in einer sogenannten Ausgleichszone (ZR) berechnet, die von vornherein in einer Bildzone gewählt wird, und ihn mit einem mittleren Bezugspegel vergleicht, um den Fehlerwert des mittleren Pegels zu bestimmen.

**9.** Anordnung nach Anspruch 8, dadurch gekennzeichnet, daß die Ausgleichszone (ZR) in einer Bildzone gewählt wird, von der von vornherein bekannt ist, daß sie eine Erdzone ist.

**10.** Anordnung nach Anspruch 9, dadurch gekennzeichnet, daß eine zusätzliche Ausgleichszone (ZR), die in einer Bildzone gewählt wird, von der von vornherein bekannt ist, daß sie eine Himmelszone ist, bei jeder neuen Berechnung des mittleren Pegels der Helligkeit in der Erdausgleichszone gesichert wird, wobei der Mittelwert der Helligkeit in der letzten gesicherten Himmelszone als Referenz des mittleren Pegels des Bildes verwendet wird, wenn die Erdzone aus dem Bild verschwindet.

**11.** Anordnung nach einem der Ansprüche 8 bis 10, dadurch gekennzeichnet, daß die Ausgleichszone (ZR) aus einer Gruppe von n aneinanderstoßenden Elementarzonen gebildet wird.

**12.** Anordnung nach Anspruch 11, dadurch gekennzeichnet, daß n aus den Werten 6, 8 und 12 ausgewählt wird.

**13.** Anordnung nach Anspruch 8, dadurch gekennzeichnet, daß ihre Ansprechzeit für die automatische Steuerung des mittleren Pegels wenigstens zweimal kürzer als ihre Ansprechzeit für die automatische Verstärkungssteuerung ist, so daß die Kohärenz der beiden Steuerungen gewährleistet ist.

**14.** Kamera mit einem Bildsignaldetektor und einem Analogverarbeitungskanal für dieses Signal, dadurch gekennzeichnet, daß sie ferner eine Anordnung zur automatischen Kontrasteinstellung nach einem der Ansprüche 1 bis 7 sowie eine Einrichtung (50) mit veränderlicher Verstärkung enthält, die einen Steuereingang hat, der durch eine Schnittstellenschaltung (300) mit der Verstärkungssteuerungs der Einstellanordnung verbunden ist.

**15.** Kamera nach Anspruch 14, dadurch gekennzeichnet, daß die Einstellanordnung außerdem eine Schnittstellenschaltung (400) für die Steuerung des mittleren Pegles sowie Mittel zur Berechnung des Fehlerwertes des mittleren Pegels nach einem der Ansprüche 8 bis 13 für die Helligkeitssteuerung des Bildes und einen im Signalverarbeitungskanal enthaltenem Addierer (70) aufweist, der einerseits das Bildsignal und andererseits den Fehlerwert des mittleren Pegels empfängt.

## Claims

**1.** Device for automatic regulation of the contrast of images from a camera, based on the generation of an automatic brightness level gain control formulated from an analysis of histograms of brightness levels of image points previously placed in memory, characterized in that it comprises an automatic handler (100) for compiling the histogram of brightness levels of a set of points extracted from the complete image, a microprogrammed microprocessor (200) for controlling the gain in brightness level so as to make fixed and equal to a pre-programmed value the number of points analysed whose brightness level (N1) is usable according to two programmable thresholds and, for addressing a table consisting of a determined number of nested slices of brightness levels (N1) which groups together brightness levels (N1) and in which a so-called optimal slice ($N_O, N_{TRO}$) is delimited by the two programmable thresholds and in which with each slice ($N_{TR}$) of brightness levels (N1) is associated a value of the relative variation in gain ($\Delta G/G$) which, applied as input to the automatic brightness level gain control has the effect of translating the brightness levels (N1) of the slice ($N_{TR}$) to the optimal slice ($N_O, N_{TRO}$), and, for determining the slice number ($N_{TR}$) in which the number of grouped points is closest to the preprogrammed value of number of points analysed whose brightness level (N1) is regarded as usable, and for applying as input to the automatic brightness level gain control the relative variation in gain ($\Delta G/G$) determined by addressing the table on the basis of the slice number ($N_{TR}$).

2. Device according to Claim 1, characterized in that the automatic handler (100) compiles the histogram of brightness levels of points extracted from the image such that these points are extracted in accordance with the rule of one point in P and of one line in L of the frames of like parity in respect of images formed by a camera.

3. Device according to Claim 2, characterized in that P=4 and L=2.

4. Device according to Claim 1, characterized in that the automatic handler (100) compiles the histogram of brightness levels of the points extracted from the image on the basis of the n histograms of n elementary zones (ZE) covering the image and to which the points belong.

5. Device according to Claim 4, characterized in that each elementary zone (ZE) includes 256 analysed points and in that the automatic handler (100) includes a memory split into n zones including as many bytes as possible brightness levels (N1) of the image.

6. Device according to any one of Claims 1 to 5, characterized in that the table consists of thirteen slices, out of which the optimal slice ($N_O$) is number 8 and is delimited by the brightness levels (N1) with values 14 and 53.

7. Device according to any one of Claims 1 to 6, characterized in that the microprocessor (200) is microprogrammed so as to make fixed and equal to 80% of the number of points analysed the number of points, out of the points analysed, whose brightness level (N1) is usable.

8. Device according to any one of Claims 1 to 7, characterized in that it furthermore comprises, in order to maintain a suitable mean level in the image, a mean-level control interface circuit (400) whose input linked to the microprocessor (200) receives a mean-level error value and whose output, linked to a corresponding correction input of the camera, delivers the associated mean-level control signal intended to minimize this error value and in that the microprocessor computes the mean level of the brightness in a so-called adjustment zone (ZR) chosen a priori in an image zone and compares it with a mean reference level so as to determine the error value of the mean level.

9. Device according to Claim 8, characterized in that the adjustment zone (ZR) is chosen in an image zone known a priori as being a ground zone.

10. Device according to Claim 9, characterized in that an additional adjustment zone (ZR) chosen in an image zone known a priori as being a sky zone is saved with each new computation of mean level of brightness in the ground adjustment zone, the mean value of the brightness in the last sky zone saved being used as mean-level reference of the image when the ground zone disappears from the image.

11. Device according to one of Claims 8 to 10, characterized in that the adjustment zone (ZR) is formed from a set of n adjoining elementary zones.

12. Device according to Claim 11, characterized in that n is chosen from the values 6, 8 and 12.

13. Device according to Claim 8, characterized in that its response time for mean-level automatic control is at least twice as short as its response time for automatic gain control, so as to ensure the consistency of the two controls.

14. Camera including an image signal detector and an analog processing channel for this signal, characterized in that it furthermore includes a device for automatic regulation of contrast according to any one of Claims 1 to 7, and variable-gain means (50) having a control input linked to control the gain of the regulating device by means of an interface circuit (300).

15. Camera according to Claim 14, characterized in that the regulating device furthermore includes a mean-level control interface circuit (400) and means for computing the mean-level error value according to any one of Claims 8 to 13 for the brightness control of the images and an adder (70) provided in the signal processing channel so as to receive on the one hand the image signal and on the other hand the mean-level error value.

FIG. 1

FIG. 2

FIG. 3

ZE

ZR ( 64 ; 7 )

EP 0 487 384 B1

FIG.4

EP 0 487 384 B1

Pt.
CHAUD

Pt.
FROID

14     37     53

NI

0   4   8   12   16   20   24   28   32   36   40   44   48   52   56   60   63

$\dfrac{\Delta G}{G}$

| $N_{TR}$ | $\Delta N_{TR}$ |
|---|---|
| 1 | -7 |
| 2 | -6 |
| 3 | -5 |
| 4 | -4 |
| 5 | -3 |
| 6 | -2 |
| 7 | -1 |
| 8 | 0 |
| 9 | +1 |
| 10 | +2 |
| 11 | +3 |
| 12 | +4 |
| 13 | +5 |

$N_0$

+1/2
+3/8
+1/4
+1/8
0
-1/8
-1/4
-3/8
-1/2

0        63

# FIG.5

FIG.6

FIG.7

FIG.8

FIG.9